**Europäisches Patentamt**

**European Patent Office**

**Office européen des brevets**

(11) Publication number: **0 164 450**
**B1**

(12) **EUROPEAN PATENT SPECIFICATION**

(45) Date of publication of patent specification: **07.03.90**

(21) Application number: **84116331.4**

(22) Date of filing: **27.12.84**

(51) Int. Cl.⁵: **G 06 F 7/50**

(54) **A carry circuit suitable for a high-speed arithmetic operation.**

(30) Priority: **27.12.83 JP 250105/83**
**28.12.83 JP 247006/83**

(43) Date of publication of application:
**18.12.85 Bulletin 85/51**

(45) Publication of the grant of the patent:
**07.03.90 Bulletin 90/10**

(84) Designated Contracting States:
**DE FR GB**

(56) References cited:
**EP-A-0 075 740**
**US-A-3 553 446**
**US-A-4 031 379**

(73) Proprietor: **NEC CORPORATION**
**33-1, Shiba 5-chome, Minato-ku**
**Tokyo 108 (JP)**

(72) Inventor: **Yamada, Kouichi c/o NEC Corp.**
**33-1, Shiba 5-chome Minato-ku**
**Tokyo (JP)**
Inventor: **Mizuno, Masatoshi c/o NEC Corp.**
**33-1, Shiba 5-chome Minato-ku**
**Tokyo (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## EP 0 164 450 B1

**Description**

Background of the invention
Field of the invention

The present invention relates to a carry circuit and more particularly to a carry circuit used in a digital processing unit which can execute a multi-bit adding operation.

Description of the prior art

It is well known that, in an adding operation of a digital processing unit, a processing of a carry signal indicating an overflow of addition is very important to perform a high-speed operation. In a parallel operation of a multi-bit addition, appearance of the carry signal at one bit portion is depended on a result of addition at this portion and existence of the carry signal from the previous stage.

A well known ripple carry method is the most basic method to process the carry signal but is hard to perform an addition at a high-speed.

Particularly, in an addition to a long bit string, e.g. 32 bits or 64 bits, this method is unsuitable.

To resolve this problem a carry look ahead (hereinafter called "CLA") method has been proposed. This method is useful in a high-speed adding operation, since a processing of the addition and a processing of the carry signal can be independently performed.

In the CLA method, the carry signal is produced in accordance with a combination of contents of a pair of bits to be added. That is, if the both bits to be added are "1", the carry signal necessarily appears. Further, when either one of bits to be added is "1" and when a carry signal from the previous stage exists, the carry signal also appears. Except for the abovementioned combination, no carry signal appears. To realize this method, a decoding logic (e.g. a programmable logic array) may be used in which two bits to be added are applied to input ends, respectively, and a carry signal is derived from an output end in accordance with a combination of these two input bits.

By using the CLA method a carry signal at each bit portion is produced at a high-speed, because existence of the carry signal can be determined independently of the result of addition. However, propagation of the produced carry signal from the lower bit portion to the higher bit portion is necessary. The propagation of the carry signal is performed through a carry signal line, and therefore a delay of signal propagation is a big problem in the CLA method. This delay has a great influence on an adding operation of a long bit string.

EP 0075740 concerns a carry circuit having at least two stages each stage performing a carry operation according to a first carry signal from the previous stage and according to input data and producing a second carry signal to be transferred to the following stage each stage comprising means for generating first and second level signals, first and second means for processing two parallel carry operations according to the input data and said first and second level signals respectively, selecting means for selecting the output signal of either one of said first or second processing means in accordance with said first carry signal thereby providing said second carry signal for the following stage. In this circuit the two parallel processing means also generate two sum signals one of which has to be selected according to the first carry signal. US—A—4031379 shows a sum and carry processing means as used in each stage of the invention.

EP—A—0 130 397 is a document according to article 54(3) and relates to a similar carry circuit as in the present invention, but having a different configuration and operation of gates.

It is an object of the invention to provide a carry circuit which performs the CLA method at a high-speed and which has a short delay time for the carry signal propagation. Moreover the carry circuit according the invention shall be suitable for an addition of a long bit string.

The carry circuit which solves this object in accordance with the invention is defined in claim 1.

Further, in the case that a plurality of carry circuits according to the present invention are coupled in series for processing a long bit string, each circuit can simultaneously start a carry operation without waiting a carry signal from the previous circuit. Thus, a carry propagation delay time can be remarkably reduced.

Description of the drawings

Fig. 1 shows a block diagram of the basic arithmetic unit;

Fig. 2 shows a timing chart of an arithmetic operation of Fig. 1;

Fig. 3 shows a circuit diagram in one bit portion (Ao, Bo) and a decoding circuit for generating a $\overline{SUM}$ signal and a $\overline{CARRY}$ signal;

Fig. 4 shows a circuit diagram of one block of the prior art carry circuit;

Fig. 5 shows a circuit diagram of a carry circuit of an embodiment according to the present invention;

Fig. 6 shows a block diagram of a carry circuit of the present invention used to an arithmetic operation of a long data;

Fig. 7 shows a timing chart indicating a carry propagation delay time of Fig. 6;

Fig. 8 shows a block diagram of another embodiment of the present invention;

Fig. 9 shows a timing chart indicating a carry propagation delay time of Fig. 8; and

Fig. 10 shows a block diagram of another embodiment suitable for a long data (64 bits).

2

## Detailed description of the embodiment

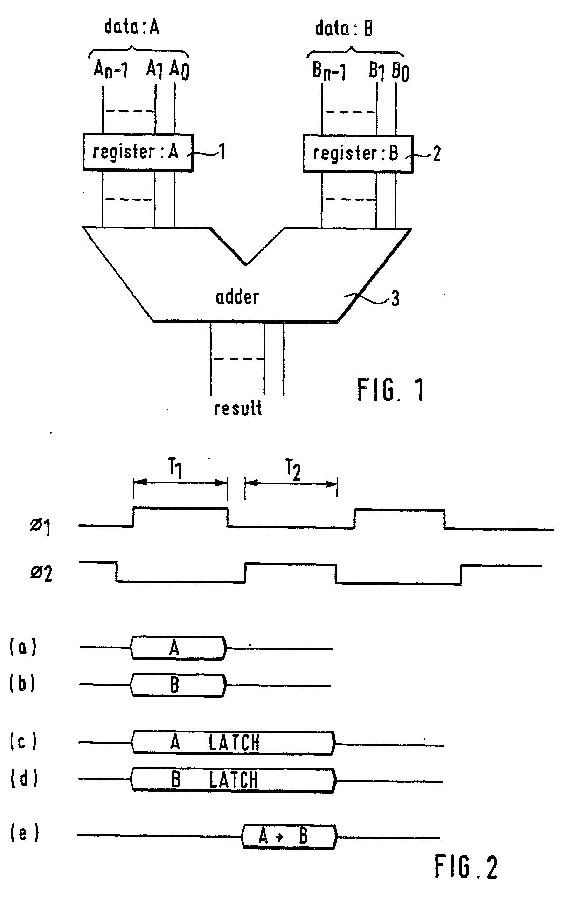

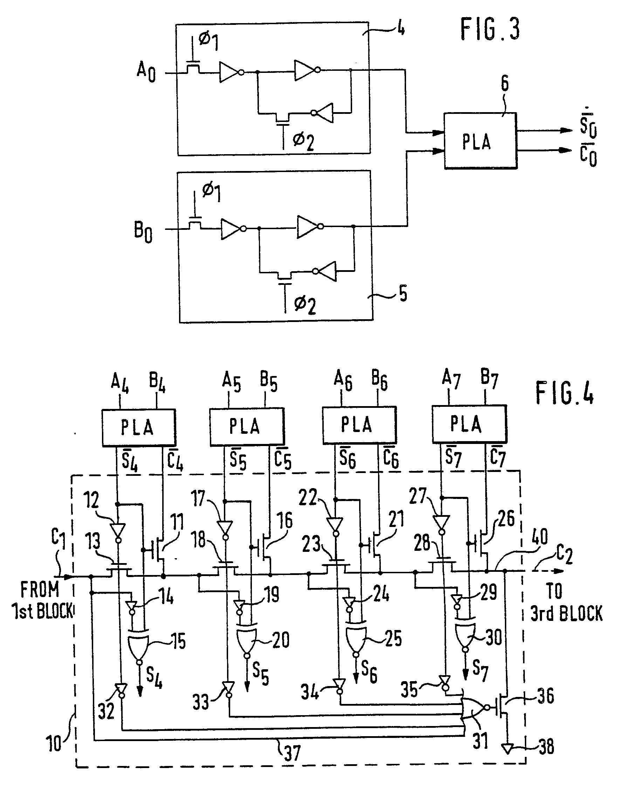

An adder circuit is illustrated in Fig. 1. This circuit is well used in a data processing apparatus and has a register 1 storing a data A of n-bit length, a register 2 storing a data B of n-bit length and an adder 3. In practical use, an adding operation is performed in accordance with a timing chart of Fig. 2. In a period $T_1$, two data A and B are set in the registers 1 and 2, respectively, as shown in (a) and (b) of Fig. 2. This period is a data transmission period. A period $T_2$ is assigned to an adding operation as shown in (e) of Fig. 2. The registers 1 and 2 latch the respective data A and B in periods $T_1$ and $T_2$ as shown in (c) and (d) of Fig. 2. Though the adder performs an addition in bit parallel, a long period of time is required to the addition (period $T_2$) when a long bit length is manipulated, because a propagation delay time of a carry signal is long.

The registers 1 and 2 of Fig. 1 have latches corresponding to a bit length of a data in number. For example, a bit Ao of the data A and a bit Bo of the data B are latched in the respective latches 4 and 5 of Fig. 3 and are applied to a decoding means 6 (a programmable logic array: PLA) in parallel. The PLA 6 decodes the input two bits Ao and Bo according to a predetermined logical algorithm shown in the following Table 1.

TABLE 1

| Input | | SUM | Carry | $\overline{SUM}$ | $\overline{Carry}$ |
|---|---|---|---|---|---|
| $Ao—A_{n-1}$ | $B_0—B_{n-1}$ | $S_0—S_{n-1}$ | $Co—C_{n-1}$ | $\overline{S_0}—\overline{S_{n-1}}$ | $\overline{C_0}—\overline{C_{n-1}}$ |
| 0 | 0 | 0 | 0 | 1 | 1 |
| 1 | 0 | 1 | 0 | 0 | 1 |
| 0 | 1 | 1 | 0 | 0 | 1 |
| 1 | 1 | 0 | 1 | 1 | 0 |

As shown in Table 1, only when the bits Ao and Bo are both "1", a carry signal Co becomes "1". Of course, the PLA can produce a sum of the bits Ao and Bo as shown in column SUM, that is the PLA 6 has an adding function of each bit and a carry signal producing function. Therefore, an adding operation is performed in accordance with outputs of the PLA 6. In other words, the adder 3 of Fig. 1 has a group of PLAs.

In general, a long data is divided into several blocks, for example a data of 32 bits is divided into 8 blocks each of which has 4 bits. A carry circuit corresponding to one of these 8 blocks is shown in Fig. 4. Fig. 4 shows a 2nd block 10 which includes bits $A_4$ to $A_7$ and bits $B_4$ to $B_7$ and receives $\overline{SUM}$ signals $\overline{S_4}$ to $\overline{S_7}$ and $\overline{CARRY}$ signals $\overline{C_4}$ to $\overline{C_7}$. The block 10 has four same stages each of which includes an inverter 12 (17, 22, 27) inverting the signal $\overline{S_4}$ ($\overline{S_5}$, $\overline{S_6}$, $\overline{S_7}$), a switching transistor 11 (16, 21, 26), a transfer gate transistor 13 (18, 23, 28), an inverter 14 (19, 24, 29) and an exclusive NOR circuit 15 (20, 25, 30). A carry signal from the 1st stage is propagated through a carry signal propagation line 40 to the 3rd stage. The transfer gate transistors 13, 18, 23 and 28 are inserted into the propagation line 40 in series. The $\overline{CARRY}$ signals $\overline{C_4}$ to $\overline{C_7}$ are coupled to the propagation line 40 when the respective switching transistor (11, 16, 21, 26) is turned on in response to the $\overline{SUM}$ signal ($\overline{S_4}$ to $\overline{S_7}$). The exclusive NOR circuits 15, 20, 25 and 30 are used to produce SUM signals $S_4$ to $S_7$ at each bit positions by adding the $\overline{SUM}$ signals $\overline{S_4}$ to $\overline{S_7}$ to a carry signal from the previous bit portion. Now, it is assumed in this embodiment that "0" level signal is propagated when the carry signal exists, while "1" level signal is propagated when no carry signal exists. Therefore, the carry signal from the previous bit portion is applied to the exclusive NOR circuits through inverters 14, 19, 24 and 29, respectively.

In Fig. 4, when $A_4$ and $B_4$ are both "0", $\overline{S_4}$ signal is "1" and $\overline{C_4}$ signal "1" as shown in Table 1. In this case, if the carry signal from the previous bit portion (output of the 1st block) is absent, the sum of bits $A_4$ and $B_4$ is "0" and no carry signal is produced. While, if the carry signal from the previous bit portion exists, an output of the exclusive NOR circuit 15 is "1" because "0" level signal is propagated from the 1st block. On this condition the transfer gate transistor 13 is turned off and the switching transistor 11 is turned on. Therefore, "1" level signal indicating that a carry signal from this bit portion ($A_4$, $B_4$) is absent is propagated to the following bit portion ($A_5$, $B_5$).

If the bits $A_4$ and $B_4$ are both "1", $\overline{S_4}$ is "1" and $\overline{C_4}$ "0" as shown in Table 1.

Therefore, the transfer gate transistor 13 is turned off, while the switching transistor 11 is turned on. Thus, "0" level signal indicating existence of a carry signal from the bit portion ($A_4$, $B_4$) is propagated to the following bit portion ($A_5$, $B_5$). The exclusive NOR circuit 15 produces "1" when a carry signal from the 1st block is present, while it produces "0" when the carry signal from the 1st block is absent.

Further, when either one of bits $A_4$ and $B_4$ is "1", $\overline{S_4}$ is "0" and $\overline{C_4}$ is "1". At this time, the transfer gate transistor 13 is turned on, while the switching transistor 11 is turned off. Therefore, if a carry signal from the

3

1st block is present, this carry signal is propagated to the following bit portion ($A_5$, $B_5$) through the transfer gate transistor 13. The exclusive NOR circuit 15 produces "0" signal as an output of $S_4$. On the other hand, if the carry signal from the 1st block is absent, an output $S_4$ of the exclusive NOR circuit 15 is "1" and the "1" level signal indicating no carry signal is directly propagated to the following bit portion through the transfer gate transistor 13.

When either one of bits in each bit portion ($A_4$ and $B_4$, $A_5$ and $B_5$, $A_6$ and $B_6$ and $A_7$ and $B_7$) of the 2nd block 10 is "1", a carry signal to the 3rd block necessarily appears if the carry signal from the 1st block is present. Inverters 32 to 35, a NOR gate circuit 31 and a transistor 36 are used to detect whether the carry signal from the 1st block is to be propagated to the 3rd block through the 2nd block or not. The NOR gate circuit 31 receives the $\overline{S_4}$ to $\overline{S_7}$ signals as it were and the carry signal from the 1st block. Therefore, if the carry signal from the 1st block is present, that is the line 37 is "0" level, the transistor 36 is turned on. Thus, the propagation line 40 is directly coupled to the ground potential 38, and a "0" level signal indicating the existence of the carry signal from the 2nd block is propagated to the 3rd block without through the transfer gate transistors 13, 18, 23 and 28.

As abovementioned, the carry circuit having the block 10 of Fig. 4 is driven on the basis of the CLA method. However, each block can not execute the carry operation until the carry signal from the previous block is received or is settled. Therefore, if each block has a carry propagation delay time ($\Delta t$), at least $8 \times \Delta t$ delay time is required in the adding period $T_2$ of Fig. 2.

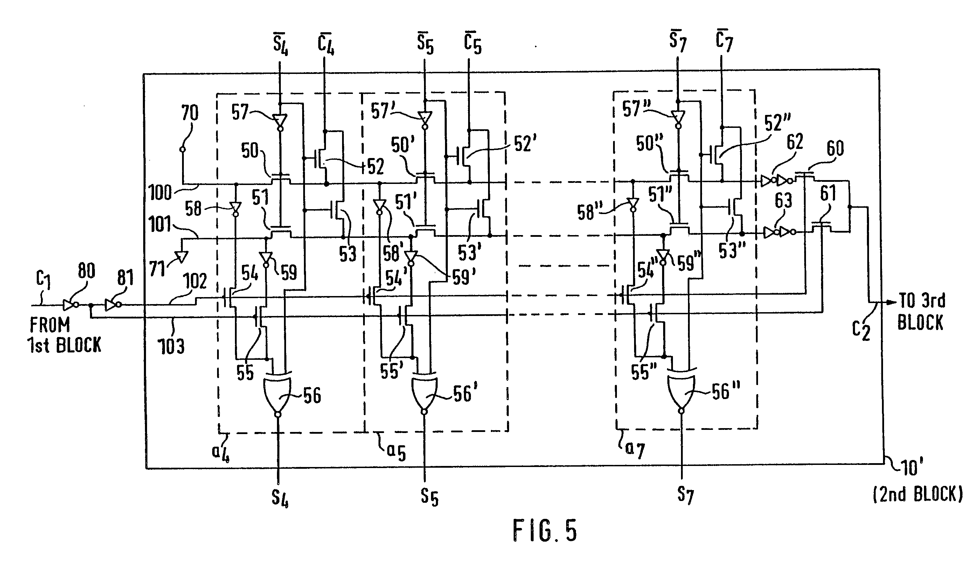

In contrast an improved carry circuit according to the present invention is illustrated in Fig. 5. Fig. 5 shows a second block 10' corresponding to Fig. 4.

According to the carry circuit of Fig. 5, a carry propagation delay time ($\Delta t$) can be remarkably reduced.

The block 10' includes four bit portions $A_4$ to $A_7$, in which $A_6$ is omitted. Each portion will be the same circuit design. For example, the portion $A_4$ includes two transfer gate transistors 50 and 51, four switching transistors 52 to 55 and an exclusive NOR circuit 56. A $\overline{S_4}$ signal is directly applied to the exclusive NOR circuit 56 and is applied to the transfer gate transistors 50 and 51 via an inverter 57. One switching transistor 52 electrically couples a $\overline{C_4}$ signal to a first propagation line 100 in response to the $\overline{S_4}$ signal. The other switching transistor 53 electrically couples the $\overline{C_4}$ signal to a second propagation line 101 in response to the $\overline{S_4}$ signal. A first signal source 70 is coupled to an input end of the first propagation line 100 for supplying a "1" level signal. While, a second signal source 71 is coupled to an input end of the second propagation line 101 for supplying a "0" level signal. A $\overline{V}_{DD}$ voltage source and a ground (GND) voltage source may be used as the first and second signal sources, respectively. The "1" level signal is propagated to a first selecting transistor 60 through the first transfer gate transistors 50, 50' and 50".

While, the "0" level signal is propagated to a second selecting transistor 61 through the second transfer gate transistors 51, 51' and 51". Buffer circuits 62 and 63 are used for buffering a propagation signal level, but may be omitted. The first and second propagation lines 100 and 101 are coupled to the other input end of the exclusive NOR circuit 56 via an inverter 58 and a third switching transistor 54 and an inverter 59 and a fourth switching transistor 55. A carry signal $c_1$ from the previous 1st block is applied to a first selecting line 102 via two inverters 80 and 81. An inverted signal of the carry signal $C_1$ is applied to a second selecting line 103 via the inverter 80. The first selecting line 102 is coupled to the third switching transistors 54, 54' and 54" and the first selecting transistor 60. The second selecting line 103 is coupled to the fourth switching transistor 55, 55' and 55" and the second selecting transistor 61.

Thus for instance when the carry signal $C_1$ is absent, that is "1" level signal ($\overline{V}_{DD}$ signal) is applied to the inverter 80, the first transfer gate transistor 50 and the first and third switching transistors 52 and 54 are valid. Since the first and second signal sources 70 and 71 supplies the fixed "1" and "0" level potential to the first and second propagation lines 100 and 101, respectively, regardless of the carry signal $C_1$, the abovementioned two carry operations have been terminated before the carry signal $C_1$ from the 1st block arrives at the inverter 80. In other words, these two carry operations are performed as soon as the $\overline{S_4}$ to $\overline{S_7}$ signals and the $\overline{C_4}$ to $\overline{C_7}$ signals are applied to the four stages $A_4$ to $A_7$. Thus a carry signal $C_2$ can be transferred to the 3rd block at a high-speed. The delay period of the 2nd block is only the sum of a transfer period of the carry signal on the lines 102 and 103 and a selecting period of the selecting transistors 60 and 61. Particularly, abovementioned two carry operations are performed within the data transfer period $T_1$ of Fig. 2. Therefore, the carry propagation delay time $\Delta t$ is remarkably reduced.

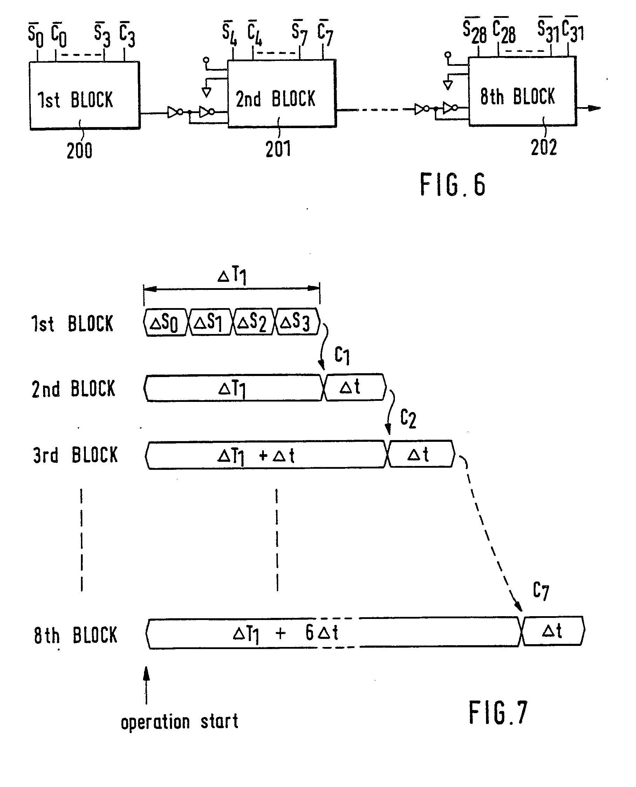

Fig. 6 illustrates a carry circuit in a 32 bits adder and Fig. 7 shows a timing chart indicating a carry propagation delay time in Fig. 6. In the 32 bits adder, 8 blocks are required as shown in Fig. 6. A first block 200 is not received a carry signal at a carry input end, and therefore a delay period $\Delta T_1$, which is equal to the sum of delay times $\Delta S_0$ to $\Delta S_3$ spent in the four bit portions ($A_0$, $B_0$ to $A_3$, $B_3$) is required. However, in the 2nd to 8th blocks 201 to 202, each carry operation is performed in a short delay time $\Delta t$.

In the prior art of Fig. 4, total delay period is $8 \times \Delta T_1$, while it is only $\Delta T_1 + 6\Delta t$ according to the embodiment shown in Fig. 6.

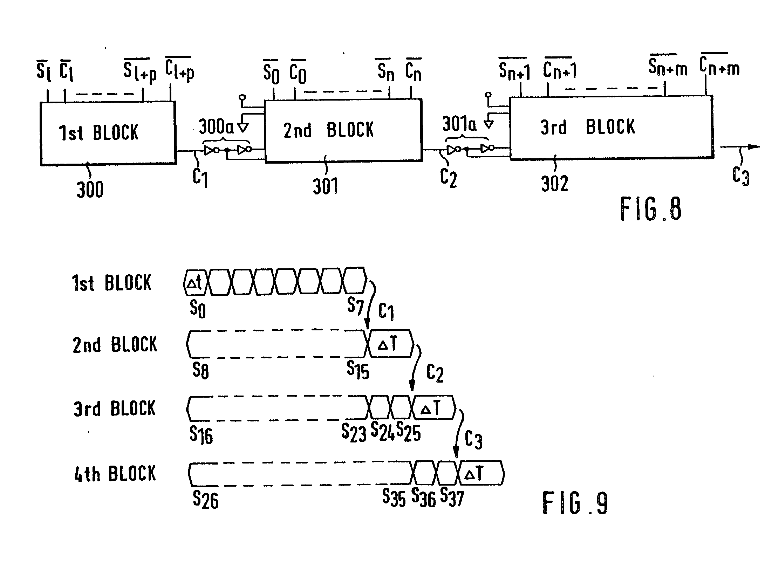

Fig. 8 shows the carry circuit of another embodiment including a plurality of blocks. This carry circuit has a first carry block 300, a second carry block 301 coupled to the first block 300 via a buffer circuit 300a, and a third carry block 302 coupled to the second block 301 via a buffer circuit 301a. Into the first block 300 are input the $\overline{SUM}$ signals of each bit $\overline{S_1}$ to $\overline{S_{1+p}}$ and the $\overline{CARRY}$ signals $\overline{C_1}$ to $\overline{C_{1+p}}$, into the second block 301 the $\overline{SUM}$ signals $\overline{S_0}$ to $\overline{S_n}$ and the $\overline{CARRY}$ signals $\overline{C_0}$ to $\overline{C_n}$, and into the third block 302 the $\overline{SUM}$ signals $\overline{S_{n+1}}$ to $\overline{S_{n+m}}$ and the $\overline{CARRY}$ signals $\overline{C_{n+1}}$ to $\overline{C_{n+m}}$, respectively.

4

EP 0 164 450 B1

In the first block 300 consisting of 1 for example, 8 bits, a carry signal $C_1$ is obtained as a result of each delay $\Delta t$ in each bit portion. In the second block 301, when the carry signal $C_1$ is determined, the abovementioned selecting operation is executed. If this selecting operation requires a period $\Delta T$ which is equal to $2\Delta t$, the third block 302 may consist of 10 bits, because the arithmetic operation in the block 302 can be executed until the carry signal $C_2$ in the second block has been output, and this block 302 can process longer than the previous block 301 by $\Delta T$, namely the process time for the two bits of sum signals $S_{24}$, $S_{25}$. This block 302 outputs a carry signal $C_3$, to the following block after $\Delta T$. In the same way, each following block can execute arithmetic operation longer than its preceding block by $\Delta T$, namely the time required for selecting operation of the transistors 60 and 61.

In the case that a plurality of the conventional carry blocks shown in Fig. 4 are coupled in series to execute an addition of long data, the following block can not start a carry operation and a sum operation until a carry signal from the previous block has been applied thereto. While, according to the carry circuit shown in Fig. 6, each block can simultaneously start a carry operation and a sum operation because waiting a carry signal from the previous block is not necessary as shown in Fig. 7. With respect to the 1st block, since this block does not receive a carry signal, a first bit portion $(A_0, B_0)$ of the 1st block may receive a "1" level signal indicating no carry signal. Therefore, the 1st block may have only the first propagation line 70 of Fig. 5, that is the circuit elements with respect to the second propagation line are not required. Of course the selecting lines 102 and 103 and the selecting transistors 60 and 61 are not required, too. Each bit portion of the 1st block may have the inverter 57, the first transfer gate 50, the first switching transistor 52 and the exclusive NOR circuit 56. Therefore, the same operation period can be assigned to all of the 1st to 8th blocks. In other words, a carry operation for producing a carry signal from the each block and a sum operation for producing the result of the addition have been terminated in the same period if each block has the same bit portions. Here, for the 2nd to the 8th blocks, a selecting operation is added to the abovementioned two operations. If the period to perform the selecting operation is equal to the period to perform the carry and sum operations in the two bit portions, the carry circuit shown in Fig. 8 can be provided. Thus, as described above, the number of divided blocks in an arithmetic operation of a long bit string (a long data) can be reduced.

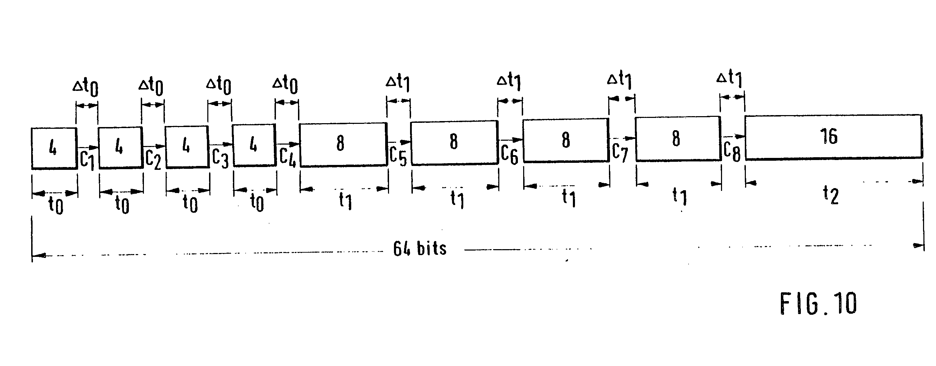

Fig. 10 shows another embodiment of a preferred carry circuit to suit for an arithmetic operation of 64 bits. In this Fig. 10, 4 bits are assigned to 1st to 4th blocks, respectively. 8 bits are assigned to 5th to 8th blocks, respectively. 16 bits are assigned to 9th block. Each carry operation time of 1st to 4th blocks is $t_0$, and each selecting period of these blocks is $\Delta t_0$. Now, if the $\Delta t_0$ corresponds to 1 bit delay time of the carry operation, the 5th block has a carry operation time $t_1$ equal to 8 bits delay time, so that the 5th block can manipulate 8 bits. Thus, the 9th block can manipulate 16 bits. A $\Delta t_1$ is longer than the $\Delta t_0$ because the selecting lines 102 and 103 of the 5th block is longer than that of the 1st to 4th blocks. According to the delay time, bits to be operated are assigned as shown in Fig. 10. As the result, a long data can be processed in a small number of blocks in accordance with a unit of bits to be transferred or to be accessed. In Fig. 10, the unit of bits is 4 bits per one address accessing.

### Claim

A carry circuit having a plurality of carry operating stages, at least one stage comprises a first transfer gate (50), a second transfer gate (51), a first switching gate (52), a second switching gate (53), an exclusive NOR circuit (56), a first means (100) provided independently of a carry input (c1) for applying a first signal (70) to an input end of said first transfer gate (50) before a carry signal from the previous stage is received at said carry input (c1), a second means (101) provided independently of said carry input (1) for applying a second signal (71) to an input end of said second transfer gate (51) before said carry signal from the previous stage is received at said carry input (c1), means (57) for controlling on and off of said first and second transfer gates (50, 51) according to a sum signal (s4) of two bits to be added, the inverted of said sum signal (s4) being applied to an input end of said exclusive NOR circuit (56), means for applying an inverted carry signal ($\overline{c4}$) produced according to combination of said two bits to be added to input ends of said first and second switching gates (52, 53), means for coupling output ends of said first and second switching gates (52, 53) to output ends of said first and second transfer gates (50, 51), means for controlling on and off of said first and second switching gates (52, 53) according to the inverted signal of said sum signal (S4), means (60, 61, 80, 81) for selecting either one of outputs of said first and second transfer gates (50, 51) according to said carry signal (c1) from said previous stage, said first means (100) and said second means (101) being selectively connected with other input end of said exclusive NOR circuit (56) via switching gates (54, 55) in response of the status of said carry signal (c1) from said previous stage, and means for transferring the selected output to the subsequent stage.

### Patentanspruch

Übertragsschaltung mit einer Vielzahl von Übertrags-Operationsstufen, wobei zumindest eine Stufe umfaßt ein erstes Übertragungstor (50), ein zweites Übertragungstor (51), ein erstes Schalttor (52), ein zweites Schalttor (53), eine ausschließende NOR-Schaltung (56), ein erstes Glied (100), das unabhängig versehen ist mit einem Übertragseingang (c1) zum Liefern eines ersten Signals (70) an einen

5

Eingangsanschluß des ersten Übertragungstors (50), bevor an dem Übertragseingang (c1) ein Übertragssignal von der vorigen Stufe empfangen wird, ein zweites Glied (101), das unabhängig versehen ist mit einem Übertragseingang (c1) zum Liefern eines zweiten Signals (71) an einen Eingangsanschluß des zweiten Übertragungstors (51), bevor an dem Übertragseingang (c1) das Übertragssignal von der vorigen Stufe empfangen wird, ein Glied (57) zum Steuern des EIN- und AUS-Zustandes des ersten und zweiten Übertragungstores (50, 51) gemäß einem Summensignal (s4) aus zwei au addierenden Bits, wobei das Umkehrsignal des Summensignals (s4) an einen Eingangsanschluß der ausschließenden NOR-Schaltung (56) geliefert wird, einem Glied zum Liefern eines entsprechend einer Kombination aus zwei zu addierenden Bits erzeugten Umkehr-Übertragungssignals (c̄4) an Eingangsanschlüsse des ersten und zweiten Schalttores (52, 53), einem Glied zum Verbinden der Ausgangsanschlüsse des ersten und zweiten Schalttores (52, 53) an Ausgangsanschlüsse des ersten und zweiten Übertragungstores (50, 51), einem Glied zum Steuern des EIN- und AUS-Zustandes des ersten und zweiten Schalttores (52 und 53) entsprechend dem umgekehrten Signal des Summensignals (s4), einem Glied (60, 61, 80, 81) zum Wählen eines der Ausgangssignale des ersten und zweiten Übertragungstores (50, 51) entsprechend dem Übertragssignal (c1) von der vorigen Stufe, wobei das erste Glied (100) und das zweite Glied (101) wahlweise mit dem anderen Eingangsanschluß der ausschließenden NOR-Schaltung (56) über die Schalttore (54, 55) verbunden wird, in Abhängigkeit von dem Zustand des Übertragssignals (c1) von der vorigen Stufe, und einem Glied zum Übertragen des ausgewählten Ausgangssignals an die nachfolgende Stufe.

**Revendication**

Circuit de retenue comportant une multitude d'étages d'opération de retenue, au moins un étage comprend une première porte de transfert (50), une seconde porte de transfert (51), une première porte de commutation (52), une seconde porte de commutation (53), un circuit NON OU exclusif (56), un premier moyen (100) pourvu indépendamment d'une entrée de retenue (C1) pour appliquer un premier signal (70) à une extrémité d'entrée de la porte de transfert (50) avant qu'un signal de retenue provenant de l'étage précédent (50) soit reçu au niveau de l'entrée de retenue (C1), un second moyen (101) pourvu indépendamment de l'entrée de retenue (C1) pour appliquer un second signal (71) à une extrémité d'entrée de la seconde porte de transfer (51) avant que le signal de retenue provenant de l'étage précédent soit reçu au niveau de l'entrée de retenue (C1), un moyen (57) servant à commander la conduction et le blocage des première et seconde portes de transfert (50, 51) en conformité avec un signal de somme (S4) de deux bits devant être additionnés, le signal inversé du signal de somme (S4) étant appliqué à une extrémité d'entrée du circuit NON OU exclusif (56), un moyen servant à appliquer un signal inversé de retenue (C̄4) produit en conformité avec une combinaison des deux bits devant être additionnés aux extrémités d'entrée des première et seconde portes de commutation (52, 53), un moyen servant à connecter des extrémités de sortie des première et seconde portes de commutation (52, 53) aux extrémités d'entrée des première et seconde portes de transfert (50, 51), un moyen servant à commander la conduction et le blocage des première et seconde portes de commutation (52, 53) en conformité avec le signal inversé du signal de somme, un moyen (S4) (60, 61, 80, 81) servant à sélectionner l'une ou l'autre des sorties des première et seconde portes de transfert (50, 51) en conformité avec le signal de retenue (C1) provenant de l'étage précédent, le premier moyen (100) et le second moyen (101) étant sélectivement connectés avec l'autre extrémité d'entrée du circuit NON OU exclusif (56) via les portes de commutation (54, 55) en réponse à l'état du signal de retenue (C1) provenant de l'étage précédent, et un moyen servant à transférer la sortie sélectionnée à l'étage ultérieur.

data : A

$A_{n-1}$    $A_1$ $A_0$

register : A    1

data : B

$B_{n-1}$    $B_1$ $B_0$

register : B    2

adder    3

result

## FIG. 1

$T_1$    $T_2$

$\varnothing_1$

$\varnothing_2$

(a)    A

(b)    B

(c)    A    LATCH

(d)    B    LATCH

(e)    A + B

## FIG. 2

1

FIG.3

FIG.4

FIG.5

EP 0 164 450 B1

FIG.6

operation start

FIG.7

4

EP 0 164 450 B1

$\overline{S_l}$ $\overline{C_l}$   $\overline{S_{l+p}}$ $\overline{C_{l+p}}$     $\overline{S_0}$ $\overline{C_0}$     $\overline{S_n}$ $\overline{C_n}$     $\overline{S_{n+1}}$ $\overline{C_{n+1}}$     $\overline{S_{n+m}}$ $\overline{C_{n+m}}$

| 1st BLOCK | 300a | 2nd BLOCK | 301a | 3rd BLOCK |

300    $C_1$    301    $C_2$    302    $C_3$

FIG.8

1st BLOCK   $\Delta t$   $S_0$   $S_7$   $C_1$

2nd BLOCK   $S_8$   $S_{15}$   $\Delta T$   $C_2$

3rd BLOCK   $S_{16}$   $S_{23}$ $S_{24}$ $S_{25}$   $\Delta T$   $C_3$

4th BLOCK   $S_{26}$   $S_{35}$ $S_{36}$ $S_{37}$   $\Delta T$

FIG.9

$\Delta t_0$  $\Delta t_0$  $\Delta t_0$  $\Delta t_0$  $\Delta t_1$  $\Delta t_1$  $\Delta t_1$  $\Delta t_1$

| 4 | $c_1$ | 4 | $c_2$ | 4 | $c_3$ | 4 | $c_4$ | 8 | $c_5$ | 8 | $c_6$ | 8 | $c_7$ | 8 | $c_8$ | 16 |

$t_0$  $t_0$  $t_0$  $t_0$  $t_1$  $t_1$  $t_1$  $t_1$  $t_2$

64 bits

FIG. 10